# EUROPEAN PATENT SPECIFICATION

(11) **EP 3 823 356 B1**
(45) Date of publication and mention of the grant of the patent: **05.10.2022**
(21) Application number: 19209776.4
(22) Date of filing: 18.11.2019
(51) Int. Cl.: H04W 36/08, B63B 49/00, G01S 19/01, H04W 36/36

(54) **MARINE RADIO CHANNEL PROPOSITION EQUIPMENT, MARINE RADIO CHANNEL PROPOSITION PROGRAM AND MARINE RADIO CHANNEL PROPOSITION METHOD**
SEEFUNKKANALVORSCHLAGSAUSRÜSTUNG, SEEFUNKKANALVORSCHLAGSPROGRAMM UND SEEFUNKKANALVORSCHLAGSVERFAHREN
ÉQUIPEMENT, PROGRAMME ET PROCÉDÉ DE PROPOSITION DE CANAUX DE RADIO MARITIME

(43) Date of publication of application: 19.05.2021
(73) Proprietor: Japan Radio Co., Ltd., Mitaka-shi, Tokyo 181-0002 (JP); Alphatron Marine Beheer B.V., 3063 Rotterdam (NL)
(72) Inventor: TAMAOKI, Hirofumi, Tokyo, 181-0002 (JP); OKUDE, Takeshi, Tokyo, 181-0002 (JP); IMADA, Yoshihiko, Tokyo, 181-0002 (JP); MIURA, Takashi, Tokyo, 181-0002 (JP); VROOMBOUT, Luuk, 3063 Rottherdam (NL); EERDEN, Bas, 3063 Rottherdam (NL); ROEST, Maarten, 3063 Rottherdam (NL)
(74) Representative: v. Bezold & Partner Patentanwälte - PartG mbB

(56) References cited:
- JP-A- H11 326 511
- US-A1- 2009 156 139
- US-B1- 6 249 241
- US-B1- 7 102 568

## Description

### Technical Field

The present disclosure relates to a technology of giving an instruction to switch a radio channel such as VHF channel which should be listened at or operated by a crew in the vicinity of boundaries of a plurality of regions which divide a river or a harbor through which a vessel navigates.

### Background Art

A radio channel such as VHF channel which should be listened at or operated by a crew is propositioned for each of a plurality of regions which divide a river or a harbor through which a vessel navigates. Therefore, it is necessary to switch a radio channel in the vicinity of boundaries of the plurality of regions. Accordingly, supervisory authority which manages rivers or harbors places notices regarding switching of a radio channel at revetments or provides in advance information regarding switching of a radio channel.

Then, a crew of a vessel switches a radio channel in the vicinity of boundaries of a plurality of regions by monitoring the notice regarding switching of a radio channel or by referring to location information of the vessel and the information regarding switching of a radio channel (see, for example, Non Patent Literature 1).

Patent Literature 1 discloses a marine vessel operable to set the operating mode of its marine radio based upon the location of the marine vessel. The marine vessel includes a first processor component operable to determine the location of the marine vessel based upon signal inputs. The marine radio incorporates a database containing a set of at least two operating modes and a second processor component operable to select an operating mode from the set of at least two operating modes based on the location of the marine vessel.

Patent Literature 2 discloses an automatic identification system control apparatus with a means for determining a current sea area in which a ship is present based on the ship position obtained from a positioning device, and for determining an operating frequency. The automatic identification system control apparatus controls a transmitter and receivers in such a way that a transmitting operation and a receiving operation are performed at the determined operating frequency.

### Citation List

### Non Patent Literature and Patent Literature

Non Patent Literature 1: "Procedure VHF Communication VTS and HCC", [online], January, 2017, Port of Rotterdam Authority Harbour Master's Division, [Retrieved on August 30, 2017], Internet, <URL:
https://www.portofrotterdam.com/en/file/4284/>;
Patent Literature 1: US 7 102 568 B1;
Patent Literature 2: JP H11 326511 A.

### Summary of Invention

### Technical Problem

That is, because a crew of a vessel requires to monitor a notice regarding switching of a radio channel or requires to refer to location information of the vessel and information regarding switching of a radio channel, it has been impossible to reduce workload for switching a channel. Further, because the crew of the vessel sometimes forgets monitoring the notice regarding switching of a radio channel or forgets referring to the location information of the vessel and the information regarding switching of a radio channel, it has been impossible to reduce occurrence of a state where the radio channel is not listened at or not operated.

Therefore, to solve the above-described problem, the present disclosure is directed to, in a case where a radio channel which should be listened at or operated by a crew is propositioned for each of a plurality of regions which divide a river or a harbor through which a vessel navigates, reducing workload for switching a channel and reducing occurrence of a state where the radio channel is not listened at or not operated.

### Solution to Problem

The invention is defined in the claims. To solve the above-described problem, channel information which associates radio channels with navigation locations is registered within equipment before navigation. During navigation, location information including information of a current location is acquired from a GPS, or the like. Then, in a case where the current location is a region where a radio channel should be switched on the basis of the channel information and the location information, a crew is instructed to switch a radio channel.

Specifically, the present disclosure is marine radio channel proposition equipment including: a channel information registering unit configured to register channel information concerning a radio channel to be listened at or operated by a crew for each of a plurality of regions which divide a river or a harbor through which a vessel is assumed to navigate; a location information acquiring unit configured to acquire location information concerning a location where the vessel is navigating; and a channel switching unit configured to give an instruction to switch the radio channel in a case where the location where the vessel is navigating is in a vicinity of boundaries of the plurality of regions on the basis of the channel information and the location information.

In addition, the present disclosure is a marine radio channel proposition program for causing a computer to sequentially execute: after channel information concerning a radio channel to be listened at or operated by a crew is registered for each of a plurality of regions which divide a river or a harbor through which a vessel is assumed to navigate, a location information acquiring step of acquiring location information concerning a location where the vessel is navigating; and a channel switching step of giving an instruction to switch the radio channel in a case where the location where the vessel is navigating is in a vicinity of boundaries of the plurality of regions on the basis of the channel information and the location information.

In addition, the present disclosure is a marine radio channel proposition method sequentially including: after channel information concerning a radio channel to be listened at or operated by a crew is registered for each of a plurality of regions which divide a river or a harbor through which a vessel is assumed to navigate, a location information acquiring step of acquiring location information concerning a location where the vessel is navigating; and a channel switching step of giving an instruction to switch the radio channel in a case where the location where the vessel is navigating is in a vicinity of boundaries of the plurality of regions on the basis of the channel information and the location information.

According to this configuration, because the crew of the vessel does not require to monitor a notice regarding switching of a radio channel or does not require to refer to location information of the vessel and information regarding switching of a radio channel, it is possible to reduce workload for switching a channel and reduce occurrence of a state where the radio channel is not listened at or not operated.

In addition, the present disclosure is the marine radio channel proposition equipment, in which the channel information registering unit registers the channel information for each of the plurality of regions which divide a linear course through which the vessel is assumed to navigate, and the marine radio channel proposition equipment further includes: a channel information acquiring/editing unit configured to acquire and/or edit the channel information; and a radio communication unit configured to execute radio communication using the radio channel.

According to this configuration, the present disclosure can be applied to radio communication equipment including a memory with small capacity, in which channel information only corresponding to linear courses is registered, and a display with a small area, at which character information can be displayed while map information cannot be displayed.

In addition, the present disclosure is the marine radio channel proposition equipment, in which the channel information registering unit registers the channel information for each of the plurality of regions which divide a planar wide area through which the vessel is assumed to navigate, and the marine radio channel proposition equipment further includes: a channel information acquiring/editing unit configured to acquire and/or edit the channel information; and a channel information display unit configured to display the channel information, the location information and map information.

According to this configuration, the present disclosure can be applied to information display equipment including a memory with large capacity, in which channel information concerning a planar wide area is registered, and a display with a large area, at which channel information concerning a planar wide area is displayed.

In addition, the present disclosure is the marine radio channel proposition equipment, in which the channel information registering unit registers assumed direction information concerning a direction in which the vessel is assumed to enter for each of the plurality of regions which divide the river or the harbor through which the vessel is assumed to navigate, the location information acquiring unit acquires actual measured direction information concerning a direction in which the vessel is navigating, and the channel switching unit gives an instruction to switch the radio channel in a case where the direction in which the vessel is navigating in a current region among the plurality of regions is included in a direction in which the vessel is assumed to enter in a next region adjacent to the current region on the basis of the assumed direction information and the actual measured direction information.

According to this configuration, it is possible to prevent an instruction to switch a radio channel from unnecessarily given to a vessel which does not enter the next region from a current region, such as, for example, a vessel which is anchored at a revetment of the current region.

In addition, the present disclosure is the marine radio channel proposition equipment, in which the channel information registering unit registers a direction close to a direction linearly connecting an entrance region and an exit region of each region as the direction in which the vessel is assumed to enter for each substantially linear region.

According to this configuration, concerning a substantially linear region, it is possible to set in a pseudo manner a direction close to a direction linearly connecting an entrance and an exit as a direction in which a vessel is assumed to enter.

In addition, the present disclosure is the marine radio channel proposition equipment, in which the channel information registering unit registers a direction close to a direction linearly connecting an entrance region and an intermediate region of each region as the direction in which the vessel is assumed to enter for each curved region.

According to this configuration, even if the region is a curved region, it is possible to set in a pseudo manner a direction close to a direction linearly connecting the entrance and a midstream as a direction in which a vessel is assumed to enter.

### Advantageous Effects of Invention

As described above, the present disclosure can, in a case where a radio channel which should be listened at or operated by a crew is propositioned for each of a plurality of regions which divide a river or a harbor through which a vessel navigates, reduce workload for switching a channel and reduce occurrence of a state where the radio channel is not listened at or not operated.

### Brief Description of Drawings

Fig. 1 is a view illustrating a configuration of a radio communication system in a first embodiment.
Fig. 2 is a view illustrating registered content of channel information in the first embodiment.
Fig. 3 is a view illustrating a switching method of a radio channel in the first embodiment.
Fig. 4 is a view illustrating switching procedure of the radio channel in the first embodiment.
Fig. 5 is a view illustrating a configuration of a radio communication system in a second embodiment.
Fig. 6 is a view illustrating registered content of channel information and a switching method of a radio channel in the second embodiment.
Fig. 7 is a view illustrating switching procedure of the radio channel in the second embodiment.

### Description of Embodiments

Embodiments of the present disclosure will be described with reference to the accompanying drawings. The embodiments described below are examples of implementation of the present disclosure, and the present disclosure is not limited to the following embodiments. In the following, the invention is described with reference to the first embodiment, while the second embodiment is provided for illustrative purposes.

### (Radio communication system in first embodiment)

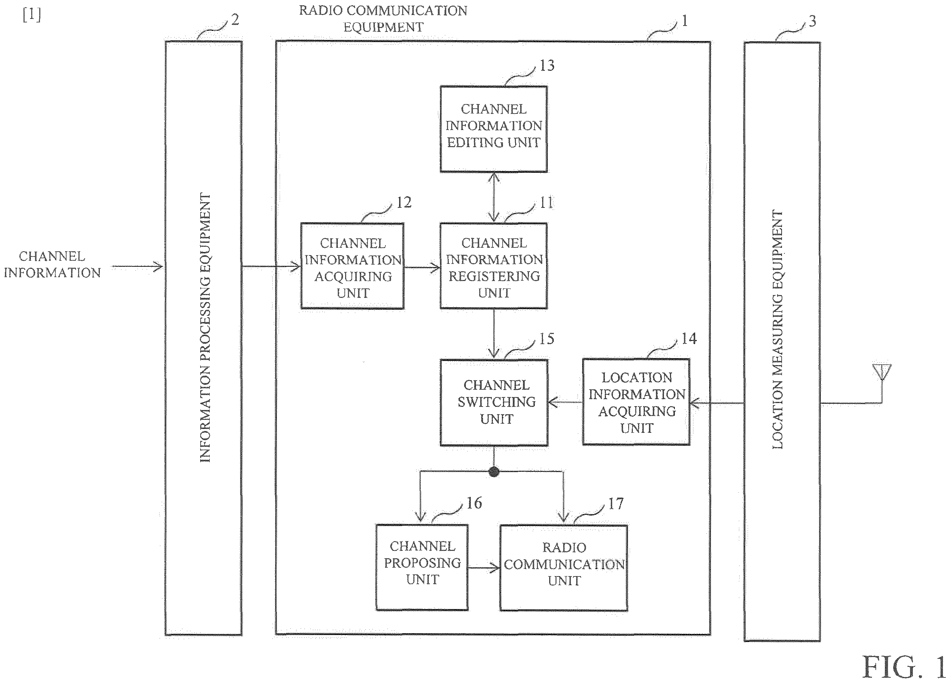

Fig. 1 illustrates a configuration of a radio communication system in a first embodiment. The radio communication system in the first embodiment includes radio communication equipment 1, information processing equipment 2 and location measuring equipment 3. The radio communication equipment 1, in which a marine radio channel proposition program is installed, includes a channel information registering unit 11, a channel information acquiring unit 12, a channel information editing unit 13, a location information acquiring unit 14, a channel switching unit 15, a channel proposing unit 16 and a radio communication unit 17.

The channel information registering unit 11 registers channel information concerning a radio channel such as VHF channel mentioned in Non Patent Literature 1 which should be listened at or operated by a crew for each of a plurality of regions which divide a linear course through which a vessel is assumed to navigate. The channel information acquiring unit 12 acquires channel information from the information processing equipment 2. The channel information editing unit 13 edits the channel information at the radio communication equipment 1. The information processing equipment 2, which is a computer, or the like, with a display, edits the channel information.

The location information acquiring unit 14 acquires location information concerning a location where the vessel is navigating from the location measuring equipment 3. The location measuring equipment 3, which is a GPS, or the like, generates location information.

The channel switching unit 15 gives an instruction to switch a radio channel in a case where a location where the vessel is navigating is in the vicinity of boundaries of a plurality of regions on the basis of the channel information and the location information. The channel proposing unit 16 proposes to switch a radio channel to a crew using display, speech or sound in accordance with the instruction to switch a radio channel from the channel switching unit 15. The radio communication unit 17 switches a radio channel in accordance with operation of switching a radio channel performed by the crew or in accordance with the instruction to switch a radio channel from the channel switching unit 15 when executing radio communication using a radio channel.

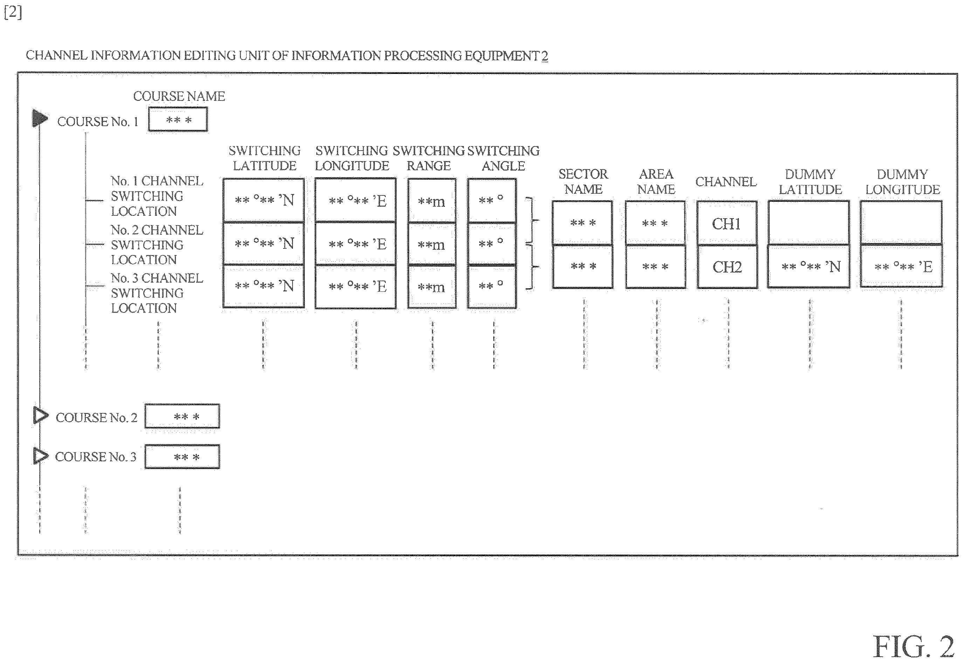

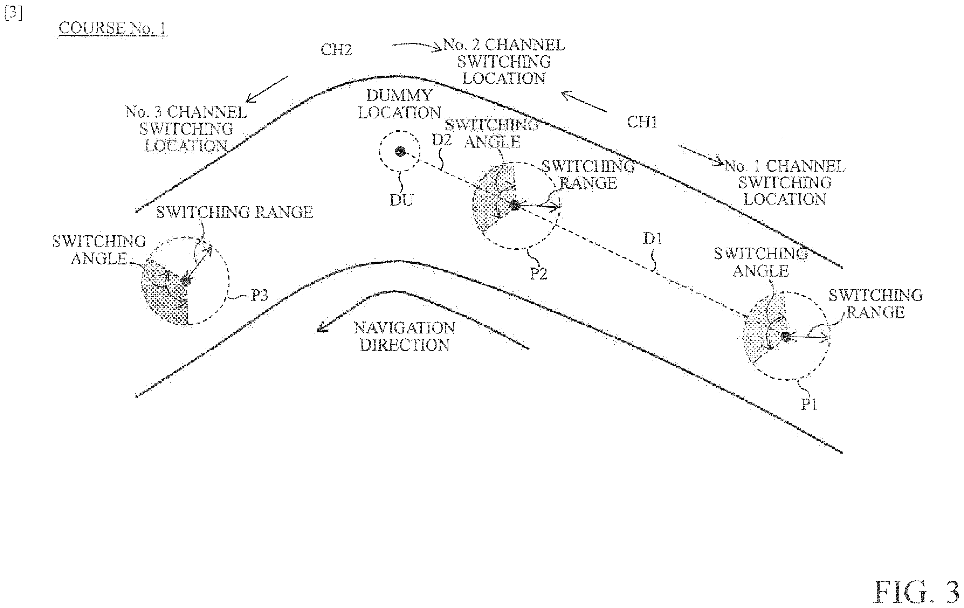

Fig. 2 illustrates registered content of the channel information in the first embodiment. Fig. 3 illustrates a switching method of a radio channel in the first embodiment. In Fig. 2, an operator edits the channel information using a large display of the information processing equipment 2. As a modified example, the operator can edit the channel information even using a small display of the channel information editing unit 13.

The operator obtains switching information of a radio channel provided in advance by supervisory authority which manages rivers or harbors as a printed document or digital data as disclosed in Non Patent Literature 1. Then, the operator edits channel information necessary for each course.

The channel information necessary for each course includes (1) course name, (2) switching latitude, switching longitude, a switching range and a switching angle of each channel switching location, and (3) sector name, area name, a channel, dummy latitude and dummy longitude between channel switching locations adjacent to each other. While, in the following description, a course No. 1 will be described, the same will also apply to courses No. 2, 3,

The "switching latitude and switching longitude of each channel switching location" are latitude and longitude at which a radio channel should be switched, and are indicated with black circles in Fig. 3. The "sector name and area name between channel switching locations adjacent to each other" are subordinate sector name and superordinate area name for a section in which the radio channel should be maintained. The "channel between channel switching locations adjacent to each other" is a radio channel which should be maintained for a section in which the radio channel should be maintained, and is indicated with CH in Fig. 3.

A radio channel which should be maintained between the No. 1 channel switching location P1 and the No. 2 channel switching location P2 is CH1. A radio channel which should be maintained between the No. 2 channel switching location P2 and a No. 3 channel switching location P3 is CH2.

The "switching range of each channel switching location" will be described. The channel switching unit 15 gives an instruction to switch a radio channel in a case where a location where the vessel is navigating is in the vicinity of boundaries of a plurality of regions on the basis of the channel information and the location information. Therefore, as the "switching range of each channel switching location", a predetermined radius centered at the latitude and longitude at which a radio channel should be switched is registered.

The "switching angle of each channel switching location" will be described. The channel information registering unit 11 registers assumed direction information concerning a direction in which a vessel is assumed to enter for each of the plurality of regions which divide a linear course through which the vessel is assumed to navigate. The location information acquiring unit 14 acquires actual measured direction information concerning a direction in which the vessel is navigating. The channel switching unit 15 gives an instruction to switch the radio channel if the direction in which the vessel is navigating in a current region among the plurality of regions is included in a direction in which the vessel is assumed to enter in a next region adjacent to the current region on the basis of the assumed direction information and the actual measured direction information. Therefore, as the "switching angle of each channel switching location", a predetermined error centered at a predetermined direction (the "predetermined direction" will be described in detail immediately below) is registered for a direction in which the vessel is assumed to enter the next region adjacent to the current region.

The channel information registering unit 11 registers a direction close to a direction linearly connecting an entrance region and an exit region of each region as a direction in which the vessel is assumed to enter for each substantially linear region. Specifically, a region between the No. 1 channel switching location P1 and the No. 2 channel switching location P2 is a substantially linear region. Therefore, as the "switching angle of each channel switching location", a predetermined error centered at a direction D1 linearly connecting the No. 1 channel switching location P1 and the No. 2 channel switching location P2 is registered. However, nothing is required to be registered as the "dummy latitude and dummy longitude between channel switching locations adjacent to each other" (which will be described in detail immediately below).

The channel information registering unit 11 registers a direction close to a direction linearly connecting the entrance region and an intermediate region of each region as the direction in which the vessel is assumed to enter for each curved region. Specifically, a region between the No. 2 channel switching location P2 and the No. 3 channel switching location P3 is a curved region. Therefore, as the "switching angle of each channel switching location", a predetermined error centered at a direction D2 linearly connecting the No. 2 channel switching location P2 and a dummy location DU is registered. Here, the dummy location DU is set between the No. 2 channel switching location P2 and the No. 3 channel switching location P3, and is linearly connected to the No. 2 channel switching location P2 without deviating from the course No. 1. Then, as the "dummy latitude and dummy longitude between channel switching locations adjacent to each other", latitude and longitude of the dummy location DU are registered.

Note that the "switching range of each channel switching location" is preferably registered as appropriate in accordance with a size of a vessel and an environment of a course. For example, in a case where a vessel is small, a course is narrow, or a vessel should comply with right-side navigation, the "switching range of each channel switching location" is set at a small range. Alternatively, the "switching range of each channel switching location" may be set at a default value.

Further, the "switching angle of each channel switching location" is preferably registered as appropriate in accordance with an environment of a course. For example, in a case where a course is narrow, or a vessel should comply with right-side navigation, the "switching angle of each channel switching location" is set at a small angle. Alternatively, the "switching angle of each channel switching location" may be set at a default value.

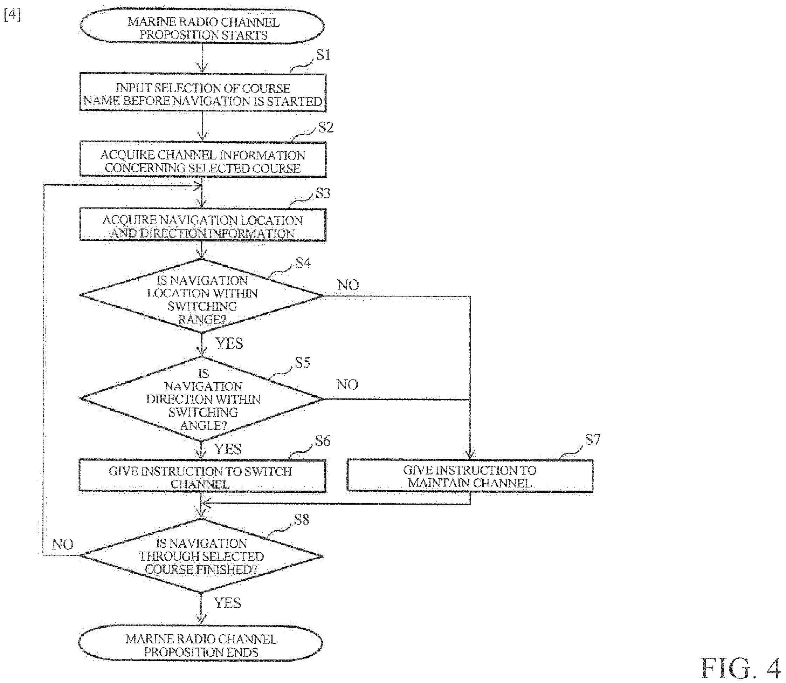

Fig. 4 illustrates switching procedure of a radio channel in the first embodiment. A crew of a vessel selects the course No. 1 from the courses No. 1, 2, 3, ... before starting navigation. The channel switching unit 15 inputs selection of the course No. 1 (step S1) and acquires channel information concerning the course No. 1 from the channel information registering unit 11 (step S2) before navigation is started.

First, operation before the vessel reaches the No. 1 channel switching location P1 will be described. The channel switching unit 15 acquires information concerning a navigation location and a navigation direction from the location information acquiring unit 14 (step S3), determines that the navigation location is outside a switching range of the No. 1 channel switching location P1 (step S4: NO) and gives an instruction to maintain the channel (step S7).

Operation when the vessel reaches the No. 1 channel switching location P1 will be described next. The channel switching unit 15 acquires information concerning a navigation location and a navigation direction from the location information acquiring unit 14 (step S3), determines that the navigation location is within the switching range of the No. 1 channel switching location P1 (step S4: YES), determines that the navigation direction is within the switching angle of the No. 1 channel switching location P1 (step S5: YES), and gives an instruction to switch a channel (step S6).

Here, the channel switching unit 15 employs a predetermined error centered at a direction D1 linearly connecting the No. 1 channel switching location P1 and the No. 2 channel switching location P2 as the switching angle of the No. 1 channel switching location P1 in step S5. Note that the channel switching unit 15 gives an instruction to maintain the channel (step S7) even in a case where it is determined that the navigation location is within the switching range of the No. 1 channel switching location P1 (step S4: YES), if it is determined that the navigation direction is outside the switching angle of the No. 1 channel switching location P1 (step S5: NO).

Next, operation before the vessel reaches the No. 2 channel switching location P2 will be described. The channel switching unit 15 acquires information concerning a navigation location and a navigation direction from the location information acquiring unit 14 (step S3), determines that the navigation location is outside a switching range of the No. 2 channel switching location P2 (step S4: NO) and gives an instruction to maintain the channel (step S7).

Operation when the vessel reaches the No. 2 channel switching location P2 will be described next. The channel switching unit 15 acquires information concerning a navigation location and a navigation direction from the location information acquiring unit 14 (step S3), determines that the navigation location is within the switching range of the No. 2 channel switching location P2 (step S4: YES), determines that the navigation direction is within the switching angle of the No. 2 channel switching location P2 (step S5: YES), and gives an instruction to switch a channel (step S6).

Here, the channel switching unit 15 employs a predetermined error centered at a direction D2 linearly connecting the No. 2 channel switching location P2 and the dummy location DU as the switching angle of the No. 2 channel switching location P2 in step S5. Note that the channel switching unit 15 gives an instruction to maintain the channel (step S7) even in a case where it is determined that the navigation location is within the switching range of the No. 2 channel switching location P2 (step S4: YES), if it is determined that the navigation direction is outside the switching angle of the No. 2 channel switching location P2 (step S5: NO).

As described in Fig. 1, the channel proposing unit 16 proposes to switch a radio channel to a crew using display in accordance with the instruction to switch a radio channel from the channel switching unit 15. Then, the radio communication unit 17 switches a radio channel in accordance with operation of switching a radio channel performed by the crew or in accordance with the instruction to switch a radio channel from the channel switching unit 15.

Until navigation through the selected course No. 1 is finished (step S8: NO), processing from step S3 to S7 is executed. When the navigation through the selected course No. 1 is finished (step S8: YES), marine radio channel proposition processing ends.

As described above, because the crew of the vessel does not require to monitor a notice regarding switching of a radio channel or does not require to refer to location information of the vessel and information regarding switching of a radio channel, it is possible to reduce workload for switching a channel and reduce occurrence of a state where the radio channel is not listened at or not operated.

Further, the first embodiment can be applied to radio communication equipment 1 including the channel information registering unit 11 with small capacity, in which channel information only corresponding to linear courses is registered, and a display with a small area, at which character information can be displayed while map information cannot be displayed.

Further, it is possible to prevent an instruction to switch a radio channel from unnecessarily given to a vessel which does not enter the next region from a current region, such as, for example, a vessel which is anchored at a revetment of the current region.

Here, concerning a substantially linear region, it is possible to set in a pseudo manner a direction close to a direction linearly connecting an entrance and an exit as a direction in which a vessel is assumed to enter.

In addition, even if the region is a curved region, it is possible to set in a pseudo manner a direction close to a direction linearly connecting the entrance and a midstream as a direction in which a vessel is assumed to enter.

### (Radio communication system in second embodiment)

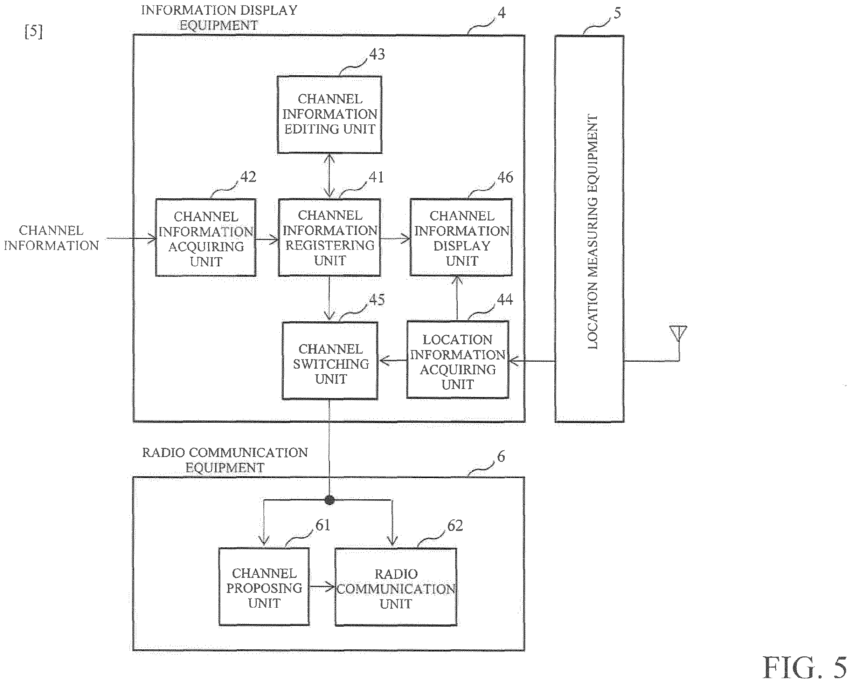

Fig. 5 illustrates a configuration of a radio communication system in a second embodiment. The radio communication system in the second embodiment includes information display equipment 4, location measuring equipment 5 and radio communication equipment 6. The information display equipment 4, in which a marine radio channel proposition program is installed, includes a channel information registering unit 41, a channel information acquiring unit 42, a channel information editing unit 43, a location information acquiring unit 44, a channel switching unit 45 and a channel information display unit 46. The radio communication equipment 6 includes a channel proposing unit 61 and a radio communication unit 62.

The channel information registering unit 41 registers channel information concerning a radio channel such as VHF channel mentioned in Non Patent Literature 1 which should be listened at or operated by a crew for each of a plurality of regions which divide a planar wide area through which a vessel is assumed to navigate. The channel information acquiring unit 42 acquires channel information from the outside (which will be described later in detail). The channel information editing unit 43 edits the channel information at the information display equipment 4.

The location information acquiring unit 44 acquires location information concerning a location where the vessel is navigating from the location measuring equipment 5. The location measuring equipment 5, which is a GPS, or the like, generates location information. The channel information display unit 46 displays the channel information, the location information and map information (such as marine chart information) at the information display equipment 4.

The channel switching unit 45 gives an instruction to switch a radio channel in a case where a location where the vessel is navigating is in the vicinity of boundaries of a plurality of regions on the basis of the channel information and the location information. The channel proposing unit 61 proposes to switch a radio channel to a crew using display, speech or sound in accordance with the instruction to switch a radio channel from the channel switching unit 45. The radio communication unit 62 switches a radio channel in accordance with operation of switching a radio channel performed by the crew or in accordance with the instruction to switch a radio channel from the channel switching unit 45 when executing radio communication using a radio channel.

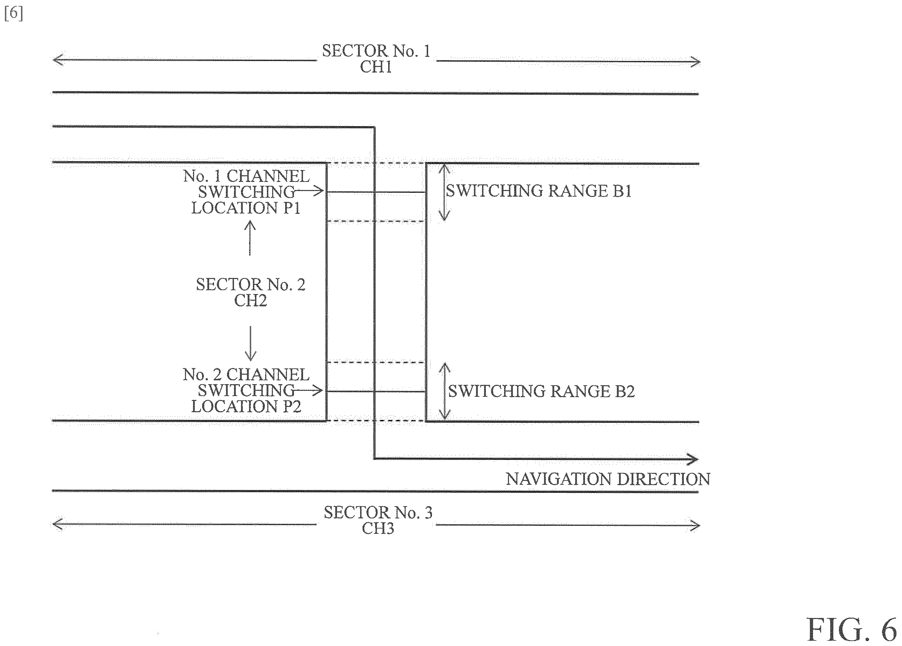

Fig. 6 illustrates registered content of the channel information and a switching method of a radio channel in the second embodiment. In Fig. 6, an operator edits the channel information with reference to the map information (such as marine chart information) using a large display of the information display equipment 4 and the channel information editing unit 43.

The operator obtains switching information of a radio channel provided in advance by supervisory authority which manages rivers or harbors as a printed document or digital data as disclosed in Non Patent Literature 1. Then, the operator edits channel information necessary for each wide area.

The channel information necessary for each wide area includes (1) wide area name, (2) switching latitude, switching longitude and a switching range of each channel switching location, and (3) sector name and a channel between channel switching locations adjacent to each other. While, in the following description, one wide area will be described, the same will also apply to other wide areas.

The "switching latitude and switching longitude of each channel switching location" are latitude and longitude at which a radio channel should be switched, and are indicated with thin solid lines in Fig. 6. The "sector name between channel switching locations adjacent to each other" are sector name of one wide area for a section in which the radio channel should be maintained. The "channel between channel switching locations adjacent to each other" is a radio channel which should be maintained for a section in which the radio channel should be maintained, and is indicated with CH in Fig. 6.

On a water channel before the No. 1 channel switching location P1 in a horizontal direction on the sheet, a radio channel which should be maintained is CH1. A radio channel which should be maintained between the No. 1 channel switching location P1 and the No. 2 channel switching location P2 is CH2. On a water channel after the No. 2 channel switching location P2 in a horizontal direction on the sheet, a radio channel which should be maintained is CH3.

The "switching range of each channel switching location" will be described. The channel switching unit 45 gives an instruction to switch a radio channel in a case where a location where the vessel is navigating is in the vicinity of boundaries of a plurality of regions on the basis of the channel information and the location information. Therefore, as the "switching range of each channel switching location", a predetermined width of the navigation direction centered at the latitude and the longitude at which a radio channel should be switched is registered.

Note that the "switching range of each channel switching location" is preferably registered as appropriate in accordance with a size of a vessel and an environment of a course. For example, in a case where a vessel is small, a course is narrow, or a vessel should comply with right-side navigation, the "switching range of each channel switching location" is set at a small range. Alternatively, the "switching range of each channel switching location" may be set at a default value.

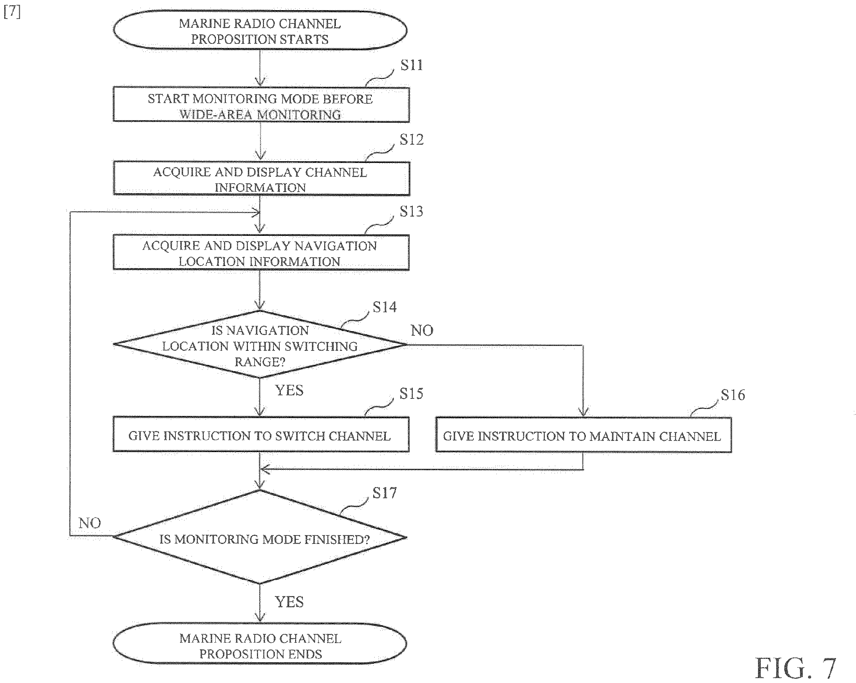

Fig. 7 illustrates switching procedure of a radio channel in the second embodiment. The crew of the vessel starts a monitoring mode before monitoring one wide area. The channel switching unit 45 starts the monitoring mode in response to an instruction from the crew of the vessel (step S11), and acquires channel information concerning one wide area from the channel information registering unit 41 (step S12). The channel information display unit 46 displays the channel information concerning one wide area (step S12).

First, operation before the vessel reaches the No. 1 channel switching location P1 will be described. The channel switching unit 45 acquires information concerning a navigation location from the location information acquiring unit 44 (step S13). The channel information display unit 46 displays the information concerning the navigation location (step S13). The channel switching unit 45 determines that the navigation location is outside switching ranges B1 and B2 of the No. 1 and 2 channels switching locations P1 and P2 (step S14: NO) and gives an instruction to maintain the channel (step S16).

Operation when the vessel reaches the No. 1 channel switching location P1 will be described next. The channel switching unit 45 acquires information concerning a navigation location from the location information acquiring unit 44 (step S13). The channel information display unit 46 displays the information concerning the navigation location (step S13). The channel switching unit 45 determines that the navigation location is within a switching range B1 of the No. 1 channel switching locations P1 (step S14: YES) and gives an instruction to switch the channel (step S15).

Before the vessel reaches the No. 2 channel switching location P2 (step S14: NO), processing similar to the above-described processing performed before the vessel reaches the No. 1 channel switching location P1 is executed (step S16). When the vessel reaches the No. 2 channel switching location P2 (step S14: YES), processing similar to the above-described processing performed when the vessel reaches the No. 1 channel switching location P1 is executed (step S15). After the vessel reaches the No. 2 channel switching location P2 (step S14: NO), processing similar to the above-described processing performed before the vessel reaches the No. 1 channel switching location P1 is executed (step S16).

As described in Fig. 5, the channel proposing unit 61 proposes to switch a radio channel to a crew using display in accordance with the instruction to switch a radio channel from the channel switching unit 45. Then, the radio communication unit 62 switches a radio channel in accordance with operation of switching a radio channel performed by the crew or in accordance with the instruction to switch a radio channel from the channel switching unit 45.

Until the monitoring mode for one wide area is finished (step S17: NO), processing from step S13 to S16 is executed. When the monitoring mode for one wide area is finished (step S17: YES), marine radio channel proposition processing ends.

As described above, because the crew of the vessel does not require to monitor a notice regarding switching of a radio channel or does not require to refer to location information of the vessel and information regarding switching of a radio channel, it is possible to reduce workload for switching a channel and reduce occurrence of a state where the radio channel is not listened at or not operated.

Then, the second embodiment can be applied to the information display equipment 4 which includes the channel information registering unit 41 with large capacity, in which channel information concerning a planar wide area is registered, and the channel information display unit 46 with a wide area, at which channel information concerning a planar wide area is displayed.

In the second embodiment, the "switching angle of each channel switching location" and the "dummy latitude and dummy longitude between channel switching locations adjacent to each other" are not registered and utilized to monitor a wide area. As a modified example, the "switching angle of each channel switching location" and the "dummy latitude and dummy longitude between channel switching locations adjacent to each other" may be registered and utilized to monitor a wide area.

### Industrial Applicability

Marine radio channel proposition equipment, marine radio channel proposition program and marine radio channel proposition method of the present disclosure can, in a case where a radio channel which should be listened at or operated by a crew is propositioned for each of a plurality of regions which divide a river or a harbor through which a vessel navigates, reduce workload for switching a channel and reduce occurrence of a state where the radio channel is not listened at or not operated.

### Reference Signs List

- 1: Radio communication equipment
- 2: Information processing equipment
- 3: Location measuring equipment
- 4: Information display equipment
- 5: Location measuring equipment
- 6: Radio communication equipment
- 11: Channel information registering unit
- 12: Channel information acquiring unit
- 13: Channel information editing unit
- 14: Location information acquiring unit
- 15: Channel switching unit
- 16: Channel proposing unit
- 17: Radio communication unit
- 41: Channel information registering unit
- 42: Channel information acquiring unit
- 43: Channel information editing unit
- 44: Location information acquiring unit
- 45: Channel switching unit
- 46: Channel information display unit
- 61: Channel proposing unit
- 62: Radio communication unit
- P1, P2, P3: Channel switching location
- B1, B2: Switching range
- DU: Dummy location

FIG. 1
   CHANNEL INFORMATION
   - 1: RADIO COMMUNICATION EQUIPMENT
   - 2: INFORMATION PROCESSING EQUIPMENT
   - 3: LOCATION MEASURING EQUIPMENT
   - 11: CHANNEL INFORMATION REGISTERING UNIT
   - 12: CHANNEL INFORMATION ACQUIRING UNIT
   - 13: CHANNEL INFORMATION EDITING UNIT
   - 14: LOCATION INFORMATION ACQUIRING UNIT
   - 15: CHANNEL SWITCHING UNIT
   - 16: CHANNEL PROPOSING UNIT
   - 17: RADIO COMMUNICATION UNIT
FIG. 2
   CHANNEL INFORMATION EDITING UNIT OF INFORMATION PROCESSING EQUIPMENT 2
   COURSE No. 1
   COURSE NAME
   No. 1 CHANNEL SWITCHING LOCATION
   No. 2 CHANNEL SWITCHING LOCATION
   No. 3 CHANNEL SWITCHING LOCATION
   SWITCHING LATITUDE
   SWITCHING LONGITUDE
   SWITCHING RANGE
   SWITCHING ANGLE
   SECTOR NAME
   AREA NAME
   CHANNEL
   DUMMY LATITUDE
   DUMMY LONGITUDE
   COURSE No. 2
   COURSE No. 3
FIG. 3
   COURSE No. 1
   No. 3 CHANNEL SWITCHING LOCATION
   No. 2 CHANNEL SWITCHING LOCATION
   No. 1 CHANNEL SWITCHING LOCATION
   SWITCHING ANGLE
   SWITCHING RANGE
   DUMMY LOCATION
   NAVIGATION DIRECTION
FIG. 4
   MARINE RADIO CHANNEL PROPOSITION STARTS
   - S1: INPUT SELECTION OF COURSE NAME BEFORE NAVIGATION IS STARTED
   - S2: ACQUIRE CHANNEL INFORMATION CONCERNING SELECTED COURSE
   - S3: ACQUIRE NAVIGATION LOCATION AND DIRECTION INFORMATION
   - S4: IS NAVIGATION LOCATION WITHIN SWITCHING RANGE?
   - S5: IS NAVIGATION DIRECTION WITHIN SWITCHING ANGLE?
   - S6: GIVE INSTRUCTION TO SWITCH CHANNEL
   - S7: GIVE INSTRUCTION TO MAINTAIN CHANNEL
   - S8: IS NAVIGATION THROUGH SELECTED COURSE FINISHED? MARINE RADIO CHANNEL PROPOSITION ENDS
FIG. 5
   - 4: INFORMATION DISPLAY EQUIPMENT
   CHANNEL INFORMATION
   - 41: CHANNEL INFORMATION REGISTERING UNIT
   - 42: CHANNEL INFORMATION ACQUIRING UNIT
   - 43: CHANNEL INFORMATION EDITING UNIT
   - 44: LOCATION INFORMATION ACQUIRING UNIT
   - 45: CHANNEL SWITCHING UNIT
   - 46: CHANNEL INFORMATION DISPLAY UNIT
   - 5: LOCATION MEASURING EQUIPMENT
   - 6: RADIO COMMUNICATION EQUIPMENT
   - 61: CHANNEL PROPOSING UNIT
   - 62: RADIO COMMUNICATION UNIT
FIG. 6
   SECTOR No. 1
   No. 1 CHANNEL SWITCHING LOCATION P1
   SECTOR No. 2
   No. 2 CHANNEL SWITCHING LOCATION P2
   SWITCHING RANGE B1
   SWITCHING RANGE B2
   NAVIGATION DIRECTION
   SECTOR No. 3
FIG. 7
   MARINE RADIO CHANNEL PROPOSITION STARTS
   - S11: START MONITORING MODE BEFORE WIDE-AREA MONITORING
   - S12: ACQUIRE AND DISPLAY CHANNEL INFORMATION
   - S13: ACQUIRE AND DISPLAY NAVIGATION LOCATION INFORMATION
   - S14: IS NAVIGATION LOCATION WITHIN SWITCHING RANGE?
   - S15: GIVE INSTRUCTION TO SWITCH CHANNEL
   - S16: GIVE INSTRUCTION TO MAINTAIN CHANNEL
   - S17: IS MONITORING MODE FINISHED?
   MARINE RADIO CHANNEL PROPOSITION ENDS

## Claims

1. Marine radio channel proposition equipment comprising:
a channel information registering unit (11) configured to register channel information concerning a radio channel to be listened at or operated by a crew for each of a plurality of regions which divide a river or a harbor through which a vessel is assumed to navigate;
a location information acquiring unit (14) configured to acquire location information concerning a location where the vessel is navigating; and
a channel switching unit (15) configured to give an instruction to switch the radio channel in a case where the location where the vessel is navigating is in a vicinity of boundaries of the plurality of regions on the basis of the channel information and the location information,
**characterized in that**
the channel information registering unit (11) is configured to register assumed direction information concerning a direction in which the vessel is assumed to enter for each of the plurality of regions which divide the river or the harbor through which the vessel is assumed to navigate,
the location information acquiring unit (14) is configured to acquire actual measured direction information concerning a direction in which the vessel is navigating, and
the channel switching unit (15) is configured to give an instruction to switch the radio channel in a case where the direction in which the vessel is navigating in a current region among the plurality of regions is included in a direction in which the vessel is assumed to enter in a next region adjacent to the current region on the basis of the assumed direction information and the actual measured direction information.

2. The marine radio channel proposition equipment according claim 1,
wherein the channel information registering unit (11) is configured to register a direction close to a direction linearly connecting an entrance region and an exit region of each region as the direction in which the vessel is assumed to enter for each substantially linear region.

3. The marine radio channel proposition equipment according to claim 1,
wherein the channel information registering unit (11) is configured to register a direction close to a direction linearly connecting an entrance region and an intermediate region of each region as the direction in which the vessel is assumed to enter for each curved region.

4. The marine radio channel proposition equipment according to any one of claims 1 to 3,
wherein the channel information registering unit (11) is configured to register the channel information for each of the plurality of regions which divide a linear course through which the vessel is assumed to navigate, and
the marine radio channel proposition equipment further comprises:
a channel information acquiring/editing unit (12, 13) configured to acquire and/or edit the channel information; and
a radio communication unit (17) configured to execute radio communication using the radio channel.

5. The marine radio channel proposition equipment according to any one of claims 1 to 3,
wherein the channel information registering unit (11) is configured to register the channel information for each of the plurality of regions which divide a planar wide area through which the vessel is assumed to navigate, and
the marine radio channel proposition equipment further comprises:
a channel information acquiring/editing unit (12, 13) configured to acquire and/or edit the channel information; and
a channel information display unit (46) configured to display the channel information, the location information and map information.

6. A marine radio channel proposition program for causing a marine radio channel proposition equipment according to any one of claims 1 to 5 to sequentially execute:
after channel information concerning a radio channel to be listened at or operated by a crew is registered for each of a plurality of regions which divide a river or a harbor through which a vessel is assumed to navigate,
a location information acquiring step (S3) of acquiring location information concerning a location where the vessel is navigating; and
a channel switching step (S6) of giving an instruction to switch the radio channel in a case where the location where the vessel is navigating is in a vicinity of boundaries of the plurality of regions on the basis of the channel information and the location information,
**characterized by**
registering assumed direction information concerning a direction in which the vessel is assumed to enter for each of the plurality of regions which divide the river or the harbor through which the vessel is assumed to navigate,
acquiring actual measured direction information concerning a direction in which the vessel is navigating, and
giving an instruction to switch the radio channel in a case where the direction in which the vessel is navigating in a current region among the plurality of regions is included in a direction in which the vessel is assumed to enter in a next region adjacent to the current region on the basis of the assumed direction information and the actual measured direction information.

7. A marine radio channel proposition method performed by marine radio channel proposition equipment sequentially comprising:
after channel information concerning a radio channel to be listened at or operated by a crew is registered for each of a plurality of regions which divide a river or a harbor through which a vessel is assumed to navigate,
a location information acquiring step (S3) of acquiring location information concerning a location where the vessel is navigating; and
a channel switching step (S6) of giving an instruction to switch the radio channel in a case where the location where the vessel is navigating is in a vicinity of boundaries of the plurality of regions on the basis of the channel information and the location information,
**characterized by**
registering assumed direction information concerning a direction in which the vessel is assumed to enter for each of the plurality of regions which divide the river or the harbor through which the vessel is assumed to navigate,
acquiring actual measured direction information concerning a direction in which the vessel is navigating, and
giving an instruction to switch the radio channel in a case where the direction in which the vessel is navigating in a current region among the plurality of regions is included in a direction in which the vessel is assumed to enter in a next region adjacent to the current region on the basis of the assumed direction information and the actual measured direction information.

## Patentansprüche

1. Vorrichtung zum Vorschlagen eines Seefunkkanals, umfassend:
eine Kanalinformations-Registriereinheit (11), die ausgebildet ist, Kanalinformationen bezüglich eines Funkkanals, der von einer Besatzung abzuhören oder zu betreiben ist, für jeden einer Vielzahl von Regionen, die einen Fluss oder einen Hafen unterteilen, durch den ein Schiff vermutlich navigiert, zu registrieren;
eine Standortinformations-Erfassungseinheit (14), die ausgebildet ist, Standortinformationen bezüglich eines Ortes, an dem das Schiff navigiert, zu erfassen; und
eine Kanalumschalteinheit (15), die ausgebildet ist, auf Basis der Kanalinformationen und der Ortsinformationen eine Anweisung zum Umschalten des Funkkanals auszugeben, wenn sich der Ort, an dem das Schiff navigiert, in der Nähe von Grenzen der Vielzahl von Regionen befindet,
**dadurch gekennzeichnet, dass**
die Kanalinformations-Registriereinheit (11) ausgebildet ist, angenommene Richtungsinformationen bezüglich einer Richtung, in die das Schiff vermutlich einläuft, für jede der Vielzahl von Regionen, die den Fluss oder den Hafen unterteilen, durch den das Schiff vermutlich navigiert, zu registrieren,
die Standortinformations-Erfassungseinheit (14) ausgebildet ist, tatsächlich gemessene Richtungsinformationen bezüglich einer Richtung zu erfassen, in der das Schiff navigiert, und
die Kanalumschalteinheit (15) ausgebildet ist, auf Basis der angenommenen Richtungsinformationen und der tatsächlich gemessenen Richtungsinformationen eine Anweisung zum Umschalten des Funkkanals auszugeben, wenn die Richtung, in der das Schiff in einer aktuellen Region unter der Vielzahl von Regionen navigiert, in einer Richtung enthalten ist, in der das Schiff vermutlich in eine nächste Region, die an die aktuelle Region angrenzt, einläuft.

2. Vorrichtung zum Vorschlagen eines Seefunkkanals nach Anspruch 1,
wobei die Kanalinformations-Registriereinheit (11) ausgebildet ist, für jede im Wesentlichen lineare Region eine Richtung nahe einer Richtung, die einen Eingangsbereich und einen Ausgangsbereich jeder Region linear verbindet, als die Richtung zu registrieren, in die das Schiff vermutlich einläuft.

3. Vorrichtung zum Vorschlagen eines Seefunkkanals nach Anspruch 1,
wobei die Kanalinformations-Registriereinheit (11) ausgebildet ist, für jede gekrümmte Region eine Richtung nahe einer Richtung, die einen Eingangsbereich und einen Zwischenbereich jeder Region linear verbindet, als die Richtung zu registrieren, in der das Schiff vermutlich einläuft.

4. Vorrichtung zum Vorschlagen eines Seefunkkanals nach einem der Ansprüche 1 bis 3,
wobei die Kanalinformations-Registriereinheit (11) ausgebildet ist, die Kanalinformationen für jeden der Vielzahl von Regionen, die einen linearen Kurs unterteilen, entlang dem das Schiff vermutlich navigiert, zu registrieren, und
die Vorrichtung zum Vorschlagen eines Seefunkkanals ferner umfasst:
eine Kanalinformations-Erfassungs-/Bearbeitungseinheit (12, 13), die ausgebildet ist, die Kanalinformationen zu erfassen und/oder zu bearbeiten; und
eine Funkkommunikationseinheit (17), die ausgebildet ist, eine Funkkommunikation über den Funkkanal durchzuführen.

5. Vorrichtung zum Vorschlagen eines Seefunkkanals nach einem der Ansprüche 1 bis 3,
wobei die Kanalinformations-Registriereinheit (11) ausgebildet ist, die Kanalinformationen für jeden der Vielzahl von Regionen, die einen ebenen, weiten Bereich, durch den das Schiff vermutlich navigiert, unterteilen, zu registrieren, und
Vorrichtung zum Vorschlagen eines Seefunkkanals ferner umfasst:
eine Kanalinformations-Erfassungs-/Bearbeitungseinheit (12, 13), die ausgebildet ist, die Kanalinformationen zu erfassen und/oder zu bearbeiten; und
eine Kanalinformations-Anzeigeeinheit (46), die ausgebildet ist, die Kanalinformationen, die Standortinformationen und die Karteninformationen anzuzeigen.

6. Programm zum Vorschlagen eines Seefunkkanals Seefunkkanal-Vorschlagsprogramm, um eine Vorrichtung zum Vorschlagen eines Seefunkkanals nach einem der Ansprüche 1 bis 5 zu veranlassen, sequentiell auszuführen:
nachdem Kanalinformationen bezüglich eines Funkkanals, der von einer Besatzung abzuhören oder zu betreiben ist, für jeden einer Vielzahl von Regionen, die einen Fluss oder einen Hafen unterteilen, durch den ein Schiff vermutlich navigiert, registriert wurden,
einen Ortsinformationserfassungsschritt (S3) zum Erfassen von Ortsinformationen bezüglich eines Ortes, an dem das Schiff navigiert; und
einen Kanalumschaltschritt (S6) zum Ausgeben einer Anweisung zum Umschalten des Funkkanals auf Basis der Kanalinformationen und der Ortsinformationen, wenn sich der Ort, an dem das Schiff navigiert, in der Nähe von Grenzen der Vielzahl von Regionen befindet,
**gekennzeichnet durch**
ein Registrieren von angenommenen Richtungsinformationen bezüglich einer Richtung, in die das Schiff vermutlich einläuft, für jede der Vielzahl von Regionen, die den Fluss oder den Hafen unterteilen, durch den das Schiff vermutlich navigiert,
ein Erfassen von tatsächlich gemessenen Richtungsinformationen bezüglich einer Richtung, in der das Schiff navigiert, und
ein Ausgeben einer Anweisung zum Umschalten des Funkkanals auf Basis der angenommenen Richtungsinformationen und der tatsächlich gemessenen Richtungsinformationen, wenn die Richtung, in der das Schiff in einer aktuellen Region unter der Vielzahl von Regionen navigiert, in einer Richtung enthalten ist, in der das Schiff vermutlich in eine nächste Region, die an die aktuelle Region angrenzt, einläuft.

7. Verfahren zum Vorschlagen eines Seefunkkanals, das von einer eine Vorrichtung zum Vorschlagen eines Seefunkkanals ausgeführt wird und sequentiell umfasst:
nachdem Kanalinformationen bezüglich eines Funkkanals, der von einer Besatzung abzuhören oder zu betreiben ist, für jeden einer Vielzahl von Regionen, die einen Fluss oder einen Hafen unterteilen, durch den ein Schiff vermutlich navigiert, registriert wurden,
einen Ortsinformationserfassungsschritt (S3) zum Erfassen von Ortsinformationen bezüglich eines Ortes, an dem das Schiff navigiert; und
einen Kanalumschaltschritt (S6) zum Ausgeben einer Anweisung zum Umschalten des Funkkanals auf Basis der Kanalinformationen und der Ortsinformationen, wenn sich der Ort, an dem das Schiff navigiert, in der Nähe von Grenzen der Vielzahl von Regionen befindet,
**gekennzeichnet durch**
ein Registrieren von angenommenen Richtungsinformationen bezüglich einer Richtung, in die das Schiff vermutlich einläuft, für jede der Vielzahl von Regionen, die den Fluss oder den Hafen unterteilen, durch den das Schiff vermutlich navigiert,
ein Erfassen von tatsächlich gemessenen Richtungsinformationen bezüglich einer Richtung, in der das Schiff navigiert, und
ein Ausgeben einer Anweisung zum Umschalten des Funkkanals auf Basis der angenommenen Richtungsinformationen und der tatsächlich gemessenen Richtungsinformationen, wenn die Richtung, in der das Schiff in einer aktuellen Region unter der Vielzahl von Regionen navigiert, in einer Richtung enthalten ist, in der das Schiff vermutlich in eine nächste Region, die an die aktuelle Region angrenzt, einläuft.

## Revendications

1. Équipement de proposition de canaux de radio maritime comprenant :
une unité d'enregistrement d'informations de canal (11) configurée pour enregistrer des informations de canal concernant un canal de radio devant être écouté ou utilisé par un équipage pour chacune d'une pluralité de régions qui divisent une rivière ou un port à travers lequel un vaisseau est supposé naviguer ;
une unité d'acquisition d'informations d'emplacement (14) configurée pour acquérir des informations d'emplacement concernant un emplacement où le vaisseau navigue ; et
une unité de commutation de canal (15) configurée pour donner une instruction de commuter le canal de radio dans un cas où l'emplacement où le vaisseau navigue est à proximité de limites de la pluralité de régions sur la base des informations de canal et des informations d'emplacement,
**caractérisé en ce que**
l'unité d'enregistrement d'informations de canal (11) est configurée pour enregistrer des informations de direction supposée concernant une direction dans laquelle le vaisseau est supposé entrer pour chacune de la pluralité de régions qui divisent la rivière ou le port à travers lequel le vaisseau est supposé naviguer,
l'unité d'acquisition d'informations d'emplacement (14) est configurée pour acquérir des informations de direction mesurée réelle concernant une direction dans laquelle le vaisseau navigue, et
l'unité de commutation de canal (15) est configurée pour donner une instruction de commuter le canal de radio dans un cas où la direction dans laquelle le vaisseau navigue dans une région courante parmi la pluralité de régions est comprise dans une direction dans laquelle le vaisseau est supposé entrer dans une région suivante adjacente à la région courante sur la base des informations de direction supposée et des informations de direction mesurée réelle.

2. Équipement de proposition de canaux de radio maritime selon la revendication 1,
dans lequel l'unité d'enregistrement d'informations de canal (11) est configurée pour enregistrer une direction proche d'une direction reliant linéairement une région d'entrée et une région de sortie de chaque région comme étant la direction dans laquelle le vaisseau est supposé entrer pour chaque région sensiblement linéaire.

3. Équipement de proposition de canaux de radio maritime selon la revendication 1,
dans lequel l'unité d'enregistrement d'informations de canal (11) est configurée pour enregistrer une direction proche d'une direction reliant linéairement une région d'entrée et une région intermédiaire de chaque région comme étant la direction dans laquelle le vaisseau est supposé entrer pour chaque région incurvée.

4. Équipement de proposition de canaux de radio maritime selon l'une quelconque des revendications 1 à 3,
dans lequel l'unité d'enregistrement d'informations de canal (11) est configurée pour enregistrer les informations de canal pour chacune de la pluralité de régions qui divisent un parcours linéaire dans lequel le vaisseau est supposé naviguer, et
l'équipement de proposition de canaux de radio maritime comprend en outre :
une unité d'acquisition/édition d'informations de canal (12, 13) configurée pour acquérir et/ou éditer les informations de canal ; et
une unité de communication radio (17) configurée pour exécuter une communication radio en utilisant le canal de radio.

5. Équipement de proposition de canaux de radio maritime selon l'une quelconque des revendications 1 à 3,
dans lequel l'unité d'enregistrement d'informations de canal (11) est configurée pour enregistrer les informations de canal pour chacune de la pluralité de régions qui divisent une zone étendue plane dans laquelle le vaisseau est supposé naviguer, et
l'équipement de proposition de canaux de radio maritime comprend en outre :
une unité d'acquisition/édition d'informations de canal (12, 13) configurée pour acquérir et/ou éditer les informations de canal ; et
une unité d'affichage d'informations de canal (46) configurée pour afficher les informations de canal, les informations d'emplacement et des informations de carte.

6. Programme de proposition de canaux de radio maritime pour amener un équipement de proposition de canaux de radio maritime selon l'une quelconque des revendications 1 à 5 à exécuter séquentiellement :
après que des informations de canal concernant un canal de radio devant être écouté ou utilisé par un équipage ont été enregistrées pour chacune d'une pluralité de régions qui divisent une rivière ou un port à travers lequel un vaisseau est supposé naviguer,
une étape d'acquisition d'informations d'emplacement (S3) consistant à acquérir des informations d'emplacement concernant un emplacement où le vaisseau navigue ; et
une étape de commutation de canal (S6) consistant à donner une instruction de commuter le canal de radio dans un cas où l'emplacement où le vaisseau navigue est à proximité de limites de la pluralité de régions sur la base des informations de canal et des informations d'emplacement,
**caractérisé par**
l'enregistrement d'informations de direction supposée concernant une direction dans laquelle le vaisseau est supposé entrer pour chacune de la pluralité de régions qui divisent la rivière ou le port à travers lequel le vaisseau est supposé naviguer,
l'acquisition d'informations de direction mesurée réelle concernant une direction dans laquelle le vaisseau navigue, et
le fait de donner une instruction de commuter le canal de radio dans un cas où la direction dans laquelle le vaisseau navigue dans une région courante parmi la pluralité de régions est comprise dans une direction dans laquelle le vaisseau est supposé entrer dans une région suivante adjacente à la région courante sur la base des informations de direction supposée et des informations de direction mesurée réelle.

7. Procédé de proposition de canaux de radio maritime réalisé par un équipement de proposition de canaux de radio maritime comprenant séquentiellement :
après que des informations de canal concernant un canal de radio devant être écouté ou utilisé par un équipage ont été enregistrées pour chacune d'une pluralité de régions qui divisent une rivière ou un port à travers lequel un vaisseau est supposé naviguer,
une étape d'acquisition d'informations d'emplacement (S3) consistant à acquérir des informations d'emplacement concernant un emplacement où le vaisseau navigue ; et
une étape de commutation de canal (S6) consistant à donner une instruction de commuter le canal de radio dans un cas où l'emplacement où le vaisseau navigue est à proximité de limites de la pluralité de régions sur la base des informations de canal et des informations d'emplacement,
**caractérisé par**
l'enregistrement d'informations de direction supposée concernant une direction dans laquelle le vaisseau est supposé entrer pour chacune de la pluralité de régions qui divisent la rivière ou le port à travers lequel le vaisseau est supposé naviguer,
l'acquisition d'informations de direction mesurée réelle concernant une direction dans laquelle le vaisseau navigue, et
le fait de donner une instruction de commuter le canal de radio dans un cas où la direction dans laquelle le vaisseau navigue dans une région courante parmi la pluralité de régions est comprise dans une direction dans laquelle le vaisseau est supposé entrer dans une région suivante adjacente à la région courante sur la base des informations de direction supposée et des informations de direction mesurée réelle.
